# EUROPEAN PATENT APPLICATION

(11) **EP 3 557 820 A1**
(43) Date of publication of application: **23.10.2019**
(21) Application number: 18168404.4
(22) Date of filing: 20.04.2018
(51) Int. Cl.: H04L 12/28, F24C 7/08

(54) **REMOTE CONTROL SYSTEM FOR A DOMESTIC APPLIANCE**

(71) Applicant: ELECTROLUX APPLIANCES AKTIEBOLAG, 105 45 Stockholm (SE)
(72) Inventor: CLADI, Stefano, 47100 Forli (IT)
(74) Representative: Electrolux Group Patents

(57) **Abstract**

The present invention relates to a remote control system for at least one domestic appliance 12, 14. The remote control system comprises at least one remote control device 10 connected or connectable to the domestic appliance 12, 14. At least one application software is installed on the remote control device 10. The application software corresponds with at least one domestic appliance 12, 14. The application software is adapted for checking at least one safety state of the domestic appliance 12, 14. The remote control device 10 is able to deactivate the user interface of the domestic appliance 12 and/or 14 from a distance. If the user has forgotten to deactivate the domestic appliance 12 and/or 14 and has left the building 18, then it is possible to deactivate said domestic appliance 12 and/or 14 by the remote control device 10 from a distance. Adjustments for the user interface of the domestic appliance 12 and/or 14 may be stored in the data cloud 16 by the application software activated again at a predetermined instant of time. The remote control device 10 is notified about the status of the domestic appliance 12 and/or 14.

## Description

The present invention relates to a remote control system for a domestic appliance.

A domestic appliance should be brought into a safe state. For example, an input device of a user interface is deactivated, so that the domestic appliance cannot be operated by unauthorised persons. According to another example, an oven door of a cooking oven is locked, so that the oven door cannot be opened by children. The safe state of the domestic appliance may be activated or deactivated by a remote control system.

However, the safe state of the domestic appliance cannot be clearly checked by the user from a distance.

It is an object of the present invention to provide a remote control system for a domestic appliance, which allows a reliable checking of the safe state of the domestic appliance by the user from a distance.

The object is achieved by the remote control system for a domestic appliance according to claim 1.

According to the present invention a remote control system for at least one domestic appliance is provided, wherein:
- the remote control system comprises at least one remote control device connected or connectable to the domestic appliance,
- at least one application software (APP) is installed on the remote control device,
- the application software (APP) corresponds with at least one domestic appliance, and
- the application software is adapted for checking at least one safety state of the domestic appliance.

The main idea of the present invention is the application software which is able to check one or more safety states of the domestic appliance. The user is able to check the safety state from a distance and gets certainty about the current state of the domestic appliance in absentia.

For example, the remote control device may be a smartphone, a tablet, a notebook or a laptop.

The remote control device may be connected or connectable to the domestic appliance via the internet or a data cloud, if said remote control device is far away from the domestic appliance.

In contrast, the remote control device may be connected or connectable to the domestic appliance via a wireless local area network (WLAN) or a local area network (LAN), if said remote control device is inside or close to a building, in which the domestic appliance is arranged.

Further, the domestic appliance may be connected or connectable to a router via a wireless local area network (WLAN) or a local area network (LAN).

According to an important aspect of the present invention at least one identifier of the domestic appliance is registered in the application software. This avoids that unauthorised persons and/or foreign remote control devices have access to the domestic appliance.

For example, the safety state of the domestic appliance includes at least one deactivated user interface of said domestic appliance. The deactivated user interface avoids that unauthorised persons can operate the domestic appliance.

Moreover, the safety state of the domestic appliance may include at least one locked door of said domestic appliance. In this case, the door cannot be opened by unauthorised persons.

In particular, the safety state of the domestic appliance can be activated or deactivated by the remote control device.

Further, adjustments for the user interface of the domestic appliance may be stored in the remote control device by the application software, wherein the adjustments can be manually or automatically activated again on said user interface of the domestic appliance.

For example, the adjustments for the user interface of the domestic appliance may be automatically activated again at a predetermined instant of time.

Preferably, features and main characteristics of the domestic appliance are registered in the remote control device by the application software.

In particular, an individual product number of the domestic appliance is registered in the remote control device by the application software.

Further, the remote control device may provide a status report of the domestic appliance, wherein a chronological sequence of states of the domestic appliance is displayed on said remote control device.

At last, the application software may be protected by a password.

Novel and inventive features of the present invention are set forth in the appended claims.

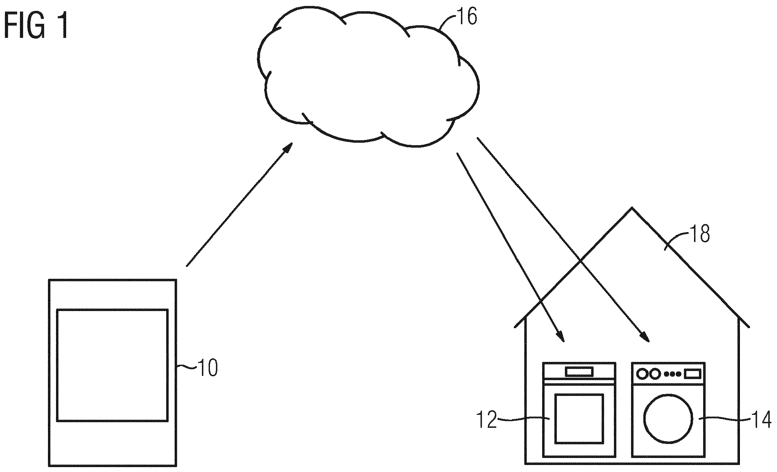

The present invention will be described in further detail with reference to the drawing, in which
- FIG 1: illustrates a schematic view of a remote control system for a domestic appliance according to a preferred embodiment of the present invention.

FIG 1 illustrates a schematic view of a remote control system for a domestic appliance according to a preferred embodiment of the present invention.

The remote control system comprises a remote control device 10, at least one domestic appliance 12 and/or 14 and an internet connection 16. In this example, the domestic appliances are a cooking oven 12 and a washing machine 14. In general, the remote control system is suitable for arbitrary domestic appliances connectable to the remote control device 10. Preferably, the remote control device 10 is a mobile remote control device. For example, the remote control device 10 is a smartphone, a tablet, a notebook or a laptop. The domestic appliances 12 and 14 are arranged inside a building 18.

For example, the domestic appliances 12 and 14 are connected to a router via a local area network (LAN) or a wireless local area network (WLAN). The remote control device 10 is connected or connectable to the domestic appliance 12 and/or 14 via the internet 16 and/or a data cloud 16, if said remote control device 10 is far away from the building 18.

Further, the remote control device 10 is connected or connectable to the domestic appliance 12 and/or 14 via a router, if said remote control device 10 is located inside or close to the building 18. In the latter case, the remote control device 10 is connected or connectable to router via the local area network (LAN) or the wireless local area network (WLAN).

An application software (APP) is installed on said remote control device 10. Said application software is provided for checking a state of the domestic appliance 12 and/or 14. In particular, the application software is provided for checking if a safety state of the domestic appliance 12 and/or 14 is activated or deactivated.

For example, an activated safety state is a locked oven door of the cooking oven 12 or a locked porthole of the washing machine 14, so that the oven door or porthole, respectively, cannot be opened by unauthorised persons. Another activated safety state is a deactivated user interface of the cooking oven 12 or of the washing machine 14, so that the user interface cannot be operated by unauthorised persons.

Preferably, the features and main characteristics of the domestic appliance 12 and/or 14 are registered in the application software. In particular, at least one identifier of the domestic appliance 12 and/or 14 is registered in the application software. Only registered users have access to the domestic appliance 12 and/or 14. The registration may be performed during an onboarding procedure. The personal user and a password for access to the private router must be known.

For example, the individual product number of the domestic appliance 12 and/or 14 is registered in the application software. This ensures that the domestic appliance cannot be checked by a foreign remote control device. Moreover, the safety state of the domestic appliance cannot be manipulated by the foreign remote control device or any other device.

Optionally, the application software on the remote control device 10 is protected by a password.

Further, the remote control device 10 is able to deactivate the user interface of the domestic appliance 12 and/or 14 from a distance. If the user has forgotten to deactivate the domestic appliance 12 and/or 14 and has left the building 18, then it is possible to deactivate said domestic appliance 12 and/or 14 by the remote control device 10 from a distance. No unauthorised person is able to activate and use the domestic appliance 12 and/or 14. The user interface of the domestic appliance 12 and/or 14 does not respond to any operation.

Moreover, the remote control device 10 is able to provide a status report of the domestic appliance 12 and/or 14. For example, the chronological sequence of the states of the domestic appliance 12 and/or 14 may be displayed on the remote control device 10.

Additionally, adjustments for the user interface of the domestic appliance 12 and/or 14 may be stored in the data cloud 16 by the application software activated again at a predetermined instant of time. The remote control device 10 is notified about the status of the domestic appliance 12 and/or 14.

The application software according to the present invention allows that the environment of the user becomes safer. The application software allows a reliable control of the current state of the domestic appliance 12 and/or 14. The safe state of the domestic appliance 12 and/or 14 prevents that vulnerable people or children misuse said domestic appliance 12 and/or 14. Only authorised persons are able to operate the domestic appliance 12 and/or 14.

Although an illustrative embodiment of the present invention has been described herein with reference to the accompanying drawings, it is to be understood that the present invention is not limited to that precise embodiment, and that various other changes and modifications may be affected therein by one skilled in the art without departing from the scope or spirit of the invention. All such changes and modifications are intended to be included within the scope of the invention as defined by the appended claims.

### List of reference numerals

- 10: remote control device
- 12: domestic appliance, cooking oven
- 14: domestic appliance, washing machine
- 16: internet, data cloud
- 18: building

## Claims

1. A remote control system for at least one domestic appliance (12, 14), wherein:
- the remote control system comprises at least one remote control device (10) connected or connectable to the domestic appliance (12, 14),
- at least one application software (APP) is installed on the remote control device (10),
- the application software (APP) corresponds with at least one domestic appliance (12, 14), and
- the application software is adapted for checking at least one safety state of the domestic appliance (12, 14).

2. The remote control system according to claim 1,
**characterised in that**
the remote control device (10) is a smartphone, a tablet, a notebook or a laptop.

3. The remote control system according to claim 1 or 2,
**characterised in that**
the remote control device (10) is connected or connectable to the domestic appliance (12, 14) via the internet (16) or a data cloud (16), if said remote control device (10) is far away from the domestic appliance (12, 14).

4. The remote control system according to any one of the preceding claims,
**characterised in that**
the remote control device (10) is connected or connectable to the domestic appliance (12, 14) via a wireless local area network (WLAN) or a local area network (LAN), if said remote control device (10) is inside or close to a building (18), in which the domestic appliance (12, 14) is arranged.

5. The remote control system according to any one of the preceding claims,
**characterised in that**
the domestic appliance (12, 14) is connected or connectable to a router via a wireless local area network (WLAN) or a local area network (LAN).

6. The remote control system according to any one of the preceding claims,
**characterised in that**
at least one identifier of the domestic appliance (12, 14) is registered in the application software.

7. The remote control system according to any one of the preceding claims,
**characterised in that**
the safety state of the domestic appliance (12, 14) includes at least one deactivated user interface of said domestic appliance (12, 14).

8. The remote control system according to any one of the preceding claims,
**characterised in that**
the safety state of the domestic appliance (12, 14) includes at least one locked door of said domestic appliance (12, 14).

9. The remote control system according to any one of the preceding claims,
**characterised in that**
the safety state of the domestic appliance (12, 14) can be activated or deactivated by the remote control device (10).

10. The remote control system according to any one of the preceding claims,
**characterised in that**
adjustments for the user interface of the domestic appliance (12, 14) can be stored in the remote control device (10) by the application software, wherein the adjustment can be manually or automatically activated again on said user interface of the domestic appliance (12, 14).

11. The remote control system according to claim 10,
**characterised in that**
the adjustments for the user interface of the domestic appliance (12, 14) can be automatically activated again at a predetermined instant of time.

12. The remote control system according to any one of the preceding claims,
**characterised in that**
features and main characteristics of the domestic appliance (12, 14) are registered in the remote control device (10) by the application software.

13. The remote control system according to any one of the preceding claims,
**characterised in that**
an individual product number of the domestic appliance (12, 14) is registered in the remote control device (10) by the application software.

14. The remote control system according to any one of the preceding claims,
**characterised in that**
the remote control device (10) provides a status report of the domestic appliance (12, 14), wherein a chronological sequence of states of the domestic appliance (12, 14) is displayed on said remote control device (10).

15. The remote control system according to any one of the preceding claims,
**characterised in that**
the application software is protected by a password.
